(19) Europäisches Patentamt
European Patent Office
Office européen des brevets

(11) **EP 1 307 709 B1**

(12) **EUROPÄISCHE PATENTSCHRIFT**

(45) Veröffentlichungstag und Bekanntmachung des Hinweises auf die Patenterteilung:
**15.04.2009 Patentblatt 2009/16**

(21) Anmeldenummer: **01962896.5**

(22) Anmeldetag: **01.08.2001**

(51) Int Cl.:
*G01D 5/244* *(2006.01)*   *G01D 5/14* *(2006.01)*

(86) Internationale Anmeldenummer:
**PCT/EP2001/008920**

(87) Internationale Veröffentlichungsnummer:
**WO 2002/010689 (07.02.2002 Gazette 2002/06)**

(54) **AKTIVER MAGNETFELDSENSOR, DESSEN VERWENDUNG, VERFAHREN UND VORRICHTUNG**

ACTIVE MAGNETIC FIELD SENSOR, USE THEREOF, METHOD AND DEVICE

DETECTEUR DE CHAMP MAGNETIQUE ACTIF, SON UTILISATION, PROCEDE ET DISPOSITIF ASSOCIES

(84) Benannte Vertragsstaaten:
**DE FR IT**

(30) Priorität: **02.08.2000 DE 10038033**
**20.10.2000 DE 10052407**
**09.11.2000 DE 10055532**

(43) Veröffentlichungstag der Anmeldung:
**07.05.2003 Patentblatt 2003/19**

(73) Patentinhaber: **Continental Teves AG & Co. oHG 60488 Frankfurt (DE)**

(72) Erfinder: **LOHBERG, Peter 61381 Friedrichsdorf (DE)**

(56) Entgegenhaltungen:
**EP-A- 0 949 510      DE-A- 3 211 554**
**DE-A- 19 618 867      DE-A- 19 701 069**
**DE-A- 19 911 774      US-A- 5 036 276**
**US-A- 6 051 971**

EP 1 307 709 B1

**Beschreibung**

Die Erfindung betrifft einen aktiven Magnetfeldsensor gemäß Oberbegriff von Anspruch 1, dessen Verwendung gemäß Anspruch 23, eine Radlagersensoreinheit gemäß Oberbegriff von Anspruch 21, eine Kraftfahrzeugbeeinflussungsvorrichtung gemäß Oberbegriff von Anspruch 22 sowie ein Verfahren gemäß Oberbegriff von Anspruch 25.

Aus der EP 0 736 183 A1 ist bekannt, für die Messung der Umlaufgeschwindigkeit der Räder eines Kraftfahrzeugs aktive Magnetfeldsensoren einzusetzen. Diese Sensoren werden zur Ermittlung u.a. der Fahrzeuggeschwindigkeit für elektronische Blockierverhinderungssysteme (ABS) und auch für Systeme zur Regelung der Fahrdynamik (ESP, TCS) benötigt und sind daher weit verbreitet.

Die aktiven Sensoren erfassen das Magnetfeld von mit dem Rad rotierenden sogenannten magnetischen Encodern, welche häufig als permanentmagnetischer Ring mit einer abwechselnden Folge von Nord-/Südpolmagnetisierungen ausgebildet sind. Es ist zudem verbreitet, daß die aktiven Sensoren die Drehzahlinformation über eine Stromschnittstelle an ein elektronisches Bremsensteuergerät (ECU) weiterleiten.

Druckschrift DE 196 18 867 A1 schlägt ein System zur Veränderung eines eine Drehbewegung repräsentierenden Signals vor, umfassend einen Magnetfeldsensor mit mehreren Ausgangssignalen und zwei Signalverarbeitungskanälen, wobei in einem ersten Signalverarbeitungskanal aus den Ausgangssignalen des Magnetfeldsensors eine Drehrichtungsinformation ermittelt wird und in einem zweiten Signalverarbeitungskanal ein Drehzahlsignal aus den Ausgangssignalen des Magnetfeldsensors erzeugt wird. Außerdem weist das System zusätzliche Sensoren, wie beispielsweise einen Belagverschleißsensor, sowie eine elektronische Schaltung zur Erzeugung eines Sensorausgangssignals umfassend die Drehzahlinformation und die Zusatzinformation auf.

In einer ganzen Reihe von Kraftfahrzeugen werden heute für blockiergeschützte Bremsen und Fahrdynamikregelungen Encoder aus magnetisierten Körpern eingesetzt, die mit dem drehenden Ring eines Radlagers mechanisch verbunden sind. Dabei kann beispielsweise die Radlagerdichtung selbst die Encodermagnetisierung aufweisen. Es ist auch üblich, als Geberräder für die aktiven Sensoren ferromagnetische Encoder, wie Zahnräder oder Lochscheiben aus Stahl zu verwenden, z.B. magnetisierte Radlagerdichtungen.

Es sind auch aktive Sensoren bekannt geworden, die neben der Raddrehzahl auch die Drehrichtung erfassen. In der Deutschen Patentanmeldung DE 19634715.7 wird eine entsprechende Anordnung zur Erfassung des Drehverhaltens eines rotierenden Encoders beschrieben. Der aktive Sensor umfaßt ein magnetoresistives Widerstandselement, das ein Magnetfeldsignal aufnimmt und dieses an einen Modulator weitergibt, der in Abhängigkeit von der Raddrehzahl das Stromsignal moduliert. Das an das Bremsensteuergerät geleitete Stromsignal ist pulsförmig codiert, wobei Impulse mit zwei Amplituden übertragen werden. Der Abstand der Impulse mit der höheren Amplitude ist ein Maß für die Raddrehzahl. Nach der DE 19634715.7 ist es möglich, zwischen diesen Impulsen, in der mehr oder minder kurzen Pulspause, einzelne Statusbits zu übertragen, wobei der Zustand eines der übertragenen Bits auch eine Information über die Drehrichtung des Rades enthält.

In Deutschen Patentanmeldung DE 19911774.8 wird eine Schnittstelle für den obigen Drehzahlsensor beschrieben, bei der die Drehrichtungsinformation und deren Gültigkeit als 2-Bit-Information innerhalb eines 8-Bit-Wortes enthalten ist, das nach jedem Drehzahlimpuls gesendet wird.

Es sind ferner aktive Sensorelemente auf Basis des Hall-Effektes erhältlich (TLE 4942, Infineon Technologies AG, München), die ein Ausgangssignal in Form einer Stromschnittstelle bereitstellen, welches neben der Drehzahl auch eine Drehrichtungsinformation kodiert überträgt. Das erzeugte Signal besteht aus einfachen rechteckförmigen Stromimpulsen der gleichen Amplitude, wobei die Zusatzinformation über die Drehrichtung durch die Impulsbreite kodiert ist.

Anordnungen zur Raddrehzahlerfassung in Kraftfahrzeugen müssen hochgenau arbeiten, zuverlässig sein und eine kostengünstige Fertigung erlauben. Zudem ist der zur Verfügung stehende Bauraum meist stark begrenzt. Da Raddrehzahlsensoren außerdem über lange Zeiträume rauhen Umgebungsbedingungen ausgesetzt sind, sind besondere konstruktive Maßnahmen erforderlich, um die oben aufgeführten Anforderungen erfüllen zu können.

Bei den bekannten Raddrehzahlsensoren auf Basis magnetoresistiver Effekte, wie AMR (Anisotrop Magneto Resistive)-Sensoren oder GMR (Giant Magneto Resistive)-Sensoren, für die Anwendung in geregelten Bremssystemen, die neben der Raddrehzahlinformation zugleich eine Information über die Drehrichtung übertragen, entspricht bei einem magnetisierten Encoder die Anzahl der erzeugten Signalperioden am Ausgang des aktiven Sensors genau der während einer Encoderumdrehung am Sensorelement vorbeibewegenden Anzahl von Nord-/Südpolwechseln bzw. bei einem ferromagnetischen Geber der Anzahl von Zahn/Lückewechseln. Das heißt, jedem Magnetisierungswechsel entspricht ein Impuls am Ausgang des Sensors.

An dieser Stelle sei darauf hingewiesen, daß es zur Zeit bei Antiblockiersystemen standardmäßig üblich ist, den Umfang des Encoders (Lesespur) in etwa 48 Nord-/Südpolpaare zu unterteilen.

Die Erfindung setzt sich mit dem Gedanken auseinander, daß es sinnvoll ist, bestehende Systeme zur Regelung des Fahrzustandes von Kraftfahrzeugen durch Erhöhung der Auflösung und Informationsvielfalt bei der Raddrehzahlerfassungsanordnung zu verbessern. So ist es beispielsweise wünschenswert, ein genaueres Antiblockiersystem bereitzustellen, mit dem sich durch eine höhere Auflösung der Bremsweg verkürzen läßt.

Die Erfindung schlägt daher einen aktiven Magnetfeldsensor zur Erfassung der Raddrehzahl gemäß Anspruch 1 vor.

Nach der Erfindung wird ein aktiver Raddrehzahlsensor vorgeschlagen, mit dem sich gegenüber bekannten Sensoren eine bezüglich der erzeugten Signalimpulse pro Encoderpolwechsel eine erhöhte Winkelauflösung erzielen läßt und zugleich ein zeitlich mit dem Drehzahlimpuls synchron übertragenes Drehrichtungssignal bereitgestellt werden kann.

Nach der bevorzugten Ausführungsform des Raddrehzahlsensors gemäß Anspruch 3 erzeugt das Magnetfeldsensorelement jeweils ein erstes und ein weiteres elektrisches, periodisches Sensorsignal, wobei insbesondere das zweite Sensorsignal gegenüber dem ersten Sensorsignal des Sensorelements eine Phasenverschiebung von $\pm\varphi$ aufweist. Mit Hilfe der unabhängigen periodischen Signale läßt sich u.a. die Drehrichtung eines Encoders erkennen.

Der Sensor nach der Erfindung läßt sich mit Magnetwandlern unterschiedlicher Wirkungsweise herstellen. So können beispielsweise magnetoresistive Sensorelemente oder Hall-Sensorelemente eingesetzt werden.

Erfindungsgemäß bevorzugt werden als magnetoresistive Sensorelemente Strukturen mit einer an sich bekannten Barper-Pole-Struktur zur Linearisierung der Kennlinie eingesetzt. Als Sensorelemente können aber auch magnetoresistive Elemente ohne Barper-Pole-Struktur z.B. in einer auf einer Ebene angeordneten elektrischen Brückenschaltung eingesetzt werden, bei denen die Normale der Sensorebene so ausgerichtet ist, daß diese senkrecht zur Normalen auf der Encoderspur und senkrecht zur Laufrichtung des Encoders ausgerichtet ist. Hierdurch wird eine während der Encoderbewegung sich im Sensorelement um 360° drehende Vektorkomponente des Encoders ausgenutzt. Aufgrund des bei Drehzahlsensoren stets vorhandenen Luftspalts werden dabei in der Regel jedoch nicht alle im Sensorelement vorhandenen Gebiete aus magnetfeldempfindlichem Material durch das Magnetfeld vollständig magnetisch gesättigt, wie dies bei an sich bekannten Winkelsensoren, bei denen ein Permanentmagnet unmittelbar über der Sensorebene rotiert, der Fall ist.

Als Wandlerelemente, die nach dem Hall-Effekt arbeiten, werden bevorzugt Differenz-Hall-Elemente verwendet, welche an sich bekannt sind. Die Hall-Elemente können insbesondere auch so ausgeführt sein, daß diese ein gemeinschaftliches Mittenareal und zwei Außenareale aufweisen, welche zueinander um einen bestimmten Betrag verschoben sind.

Zur Erfassung der rotatorischen Bewegungsgröße ist zusätzlich ein Impulsgeber nötig, der im Sinne der Erfindung als Encoder bezeichnet wird. Bei einem Encoder handelt es sich um ein Maschinenelement, in das ein inkrementaler Winkelmaßstab, die sogenannte Encoderspur, in Form einer gleichmäßigen Einteilung eingeprägt ist. Im Beispiel der Raddrehzahlerfassung ist der Encoder mit dem drehenden Rad mechanisch verbunden und die Encoderspur wird durch den ortsfest am Fahrzeug befestigten Sensor berührungslos über einen Luftspalt magnetisch abgetastet.

Der in der erfindungsgemäßen Anordnung einsetzbare Encoder enthält im Bereich des Umfangs entweder ein permanentmagnetisierbares Material oder ein ferromagnetisches Material.

Bei einem Encoder aus ferromagnetischen Material kann der Encoder zweckmäßigerweise im wesentlichen vollständig aus dem ferromagnetischen Material bestehen.

Besonders bevorzugte ferromagnetische Encoder sind z.B. Zahnräder aus Stahl oder Lochscheiben, welche eine Strukturierung entlang des Umfangs aufweisen, wie z.B. eine Folge von Zahn/Lücke bzw. Loch/Steg.

In Verbindung mit ferromagnetischen Encodern lassen sich als Sensorelemente Induktionsspulen, magnetoresistive Strukturen und Hall-Elemente verwenden, wobei auf Grund der fehlenden Permanentmagnetisierung bei dieser Art von Encodern ein in der Regel am Sensorelement angebrachter Permanentmagnet erforderlich ist.

Handelt es sich um einen ein permanentmagnetisierbares Material enthaltenden Encoder, ist vorzugsweise im Bereich des Umfangs eine multipolare Magnetisierung aufgebracht, insbesondere in Form einer Folge von abwechselnden Nord- und Südpol-Magnetisierungen des permanentmagnetischen Materials. Die Multipole bilden dann einen inkrementalen Winkelmaßstab entlang des Encoderumfangs.

Im Falle ringförmiger Encoder bilden die Areale eine kreisförmige sogenannte Encoderspur, welche entweder auf der Umfangsfläche eines scheibenförmigen Encoders oder auf der Scheibenfläche aufgebracht sein kann.

Gemäß der Erfindung wird unter einem aktiven Sensor ein Meßfühler verstanden, der zu seinem Betrieb eine externe elektrische Energieversorgung benötigt.

Werden als Sensorelemente Hall-Elemente eingesetzt, sind als Encoder bevorzugt permanentmagnetische Encoder oder ferromagnetische Encoder vorgesehen.

Die Sensorelemente wandeln das periodische magnetische Signal in ein periodisches elektrisches Signal um, dessen Periode einfach oder mehrfach die inkrementale Winkelteilung des Encoders als zeitliches Spannungs- oder Stromsignal abbildet.

Die magnetoresistiven Sensorelemente sind bevorzugt entweder AMR- oder GMR-Sensoren. Besonders bevorzugt werden magnetoresistive Sensoren nach dem AMR-Prinzip eingesetzt.

Auf dem Sensorelement sind die magnetfeldempfindlichen Strukturen bevorzugt flächenförmig insbesondere auf einer gemeinsamen Hauptebene des Sensorelementes angeordnet. Die Strukturen erzeugen in Verbindung mit einer Auswerteschaltung in Abhängigkeit von der Feldstärke und von der Richtung des Feldes ein elektrisches Signal.

Die auf dem Sensorelement angeordneten Sensorschaltungen (Wandler) zur Messung des Magnetfelds sind vorzugsweise in Form von Brückenschaltungen (z.B. Wheatstone-Brücke), Mehrfachbrücken (Brückenarrays) oder Teilbrücken aufgebracht. Eine Wheatstone-Brücken umfaßt zwei Teilbrücken. Mehrfachbrücken sind Brückenschaltungen mit mehr als zwei Teilbrücken. Unter Teilbrücken werden daher Teile einer Sensorschaltung verstanden, die gemeinsam eine Vollbrücke (Wheatstone-Brücke) ergeben. Bevorzugt sind die Teilbrücken nach der Erfindung so zueinander angeordnet, daß in Abhängigkeit eines sich zeitlich nach Maßgabe der Encoderdrehung verändernden Magnetfeld die erzeugten Signale gegeneinander um die Phase φ verschoben sind.

Vorzugsweise werden in den Sensorelementen zwei voneinander unabhängige Teilwandler genutzt, die entweder um einen Abstand d gegeneinander versetzt um einen Winkel Φ gegeneinander verdreht sind.

Der besagte Versatz bzw. die besagte Verdrehung bewirkt dann die bereits weiter oben erwähnte Signalphasenverschiebung φ am Ausgang des Sensorelements.

Im Fall von zwei Teilwandlern (Vollbrücken oder Halbbrücken) lassen sich zwei phasenverschobene, voneinander unabhängige Teilsignale, z.B. $A \cdot Sin(\omega \cdot t)$ und $B \cdot Sin(\omega \cdot t \pm \varphi)$, gewinnen.

Es ist bevorzugt, die Verdrehung oder Verschiebung durch Anpassung von Wandler und Encoder so zu gestalten, daß im wesentlichen zueinander orthogonale Teilsignale erhalten werden. Dies kann geschehen, indem die Anordnung aus Encoder und Sensorelement so konzipiert wird, daß in der obigen Formel eine Identität von $A$ und $B$ sowie ein Winkel φ von 90° angestrebt wird.

Je nach Orientierung des Sensorelements zum Encoder kann es zweckmäßig sein, zur Vorspannung des magnetoresistiven Elements einen Vorspannmagneten einzusetzen.

Mit dem Magnetsensor nach der Erfindung kann ein Encoder mit einer erhöhten Orts- bzw. Winkelauflösung abgetastet werden. Je nach Anwendungsfall kann es entweder wünschenswert sein, die erhaltene Auflösungserhöhung zur Bereitstellung beispielsweise eines genaueren Antiblockiersystems zu verwenden oder die Auflösung der Sensoranordnung durch eine gröbere Aufteilung (Erhöhung des Moduls) des Encoders so zu kompensieren, daß die Auflösung des Sensorausgangssignals unverändert bleibt. Die letztgenannte Anwendung besitzt den Vorteil, daß der Luftspalt durch die erfindungsgemäß bereitgestellte interne Auflösungserhöhung beträchtlich vergrößert werden kann. So läßt sich beispielsweise eine Sensoranordnung realisieren, welche einem Modul von etwa 2 mm noch bis zu einem Luftspalt von 2 mm noch zuverlässig arbeitet, wobei der Modul m das Verhältnis von Lesespurdurchmesser zur Anzahl der auf dem Encoderumfang angeordneten Nord-/Süd-Polpaare ist.

Es kann auch zweckmäßig sein, statt des Luftspaltes den Polteilungsjitter zu verringern. Unter einem Polteilungsjitter (auch Polteilungsfehler) wird die Einzelabweichung der Signalperioden zum mittleren Wert einer Signalperiode bezogen auf einen Encoderumlauf verstanden. Der Polteilungsjitter in der magnetischen Anordnung aus Geberrad und Sensorelement beträgt bevorzugt höchstens 2 %. Selbstverständlich ist auch eine Kombination von Luftspalterhöhung und Periodenjitterverringerung denkbar.

Die Erfindung betrifft ferner eine Radlagersensoreinheit gemäß Anspruch 21.

Bei der Radlagersensoreinheit nach der Erfindung weist der Encoder, welcher in der Regel in der Radlagerdichtung integriert ist, einen relativ kleinen Lesespurdurchmesser auf. Demgegenüber sind die erforderlichen Luftspalttoleranzen jedoch im wesentlichen genauso groß, wie bei nicht im Radlager integrierten Radrehzahlsensoranordnungen.

Würde nun zum Zwecke der gewünschten Auflösungserhöhung bei bekannten Radlagersensoranordnungen der Lesespurdurchmesser verkleinert, würde sich bei gegebenem Luftspalt das Modul reduzieren, was hinsichtlich der Fertigungskosten des Encoders unvorteilhaft ist. Auch wäre eine feinere Aufteilung der Nord-/Südpolpaare bei vorgegebenem Lesedurchmesser ebenfalls nachteilig, da sich der Modul, z.B. bei Verdopplung der Winkelauflösung auf die Hälfte verringerte. Demnach kann in beiden genannten Fällen das Problem des niedrigen Verhältnisses von Modul zu Luftspalt nicht verbessert werden. Der gleiche ungünstige Zusammenhang ergibt sich in Bezug auf den Polteilungsjitter.

Mit der Anordnung nach der Erfindung besteht auf Grund der internen Auflösungserhöhung des Sensors der Vorteil, daß sich der nutzbare Luftspaltbereich bis zum Erreichen des zulässigen Grenzwertes des Periodenjitters, vergrößert.

Weitere Ausführungsformen der Erfindung kommen in der Kraftfahrzeugbeeinflussungsvorrichtung nach Anspruch 22 sowie durch das Verfahren zum Eingriff in die Weiterfahrt eines Kraftfahrzeugs gemäß Anspruch 25 zum Ausdruck.

Die erfindungsgemäße Kraftfahrzeugbeeinflussungsvorrichtung besitzt im wesentlichen die Bestandteile einer an sich bekannten Fahrdynamikregelung, wobei diese gemäß der Erfindung um geeignete Schaltungen oder sonstige geeignete Mittel zur Auswertung des Richtungssignals erweitert ist. Solche Mittel können unter anderem neben einer Änderung der Eingangsschaltung darin bestehen, daß die von einem Mikroprozessor verarbeiteten Algorithmen einer Regelungsschleife durch geeignete zusätzliche Unterprogramme erweitert werden.

Zur Beeinflussung der Weiterfahrt besitzt die Vorrichtung Mittel zur Beeinflussung der Weiterfahrt, wie z.B. Algorithmen in einem Bremsensteuergerät, welche in die Bremsenalgorithmen eingreifen, oder eine Schnittstelle zum Eingriff in das Motormanagement oder eine Schnittstelle zu einer elektronisch steuerbaren Kupplung. Mit den Beeinflussungsmitteln in Verbindung mit dem weiter oben beschriebenen richtungssensitiven hochauflösenden Drehzahlsensor kann besonders zweckmäßig das Rollen des Fahrzeugs auf eine schiefen Ebene verhindert werden, wobei sich das beschriebene System insbesondere als Anfahrhilfe am Berg eignet

Wie bereits beschrieben, wird der Raddrehzahlsensor nach der Erfindung bevorzugt in ein Radlager integriert, ganz besonders bevorzugt erfolgt der Einsatz in solchen Radlageranordnungen, bei denen die Radlagerdichtung zugleich als magnetisierter Encoder genutzt wird.

Es ist auch bevorzugt, den erfindungsgemäßen Sensor in elektrischen Lenkungen einzusetzen.

Des weiteren betrifft die Erfindung die Verwendung des Sensors nach der Erfindung in Systemen mit bereits vorhandenen Wegrollsperren bzw. in Diebstahlsicherungssystemen für Fahrzeuge und in Bremspedalweggebern für Kraftfahrzeuge.

Bei dem vorstehend erwähnten Bremspedalweggeber, auf den sich die Erfindung ebenfalls bezieht, handelt es sich bevorzugt um eine Vorrichtung, bei der mit einem Kraftübernahmemittel (beispielsweise eine Stange zur Übertragung der Kraft eines Bremspedals auf den Bremszylinder), welches sich als Folge der Bremsbetätigung bewegt, ein linearer bzw. stabförmiger Encoder mitbewegt wird und wobei die Vorrichtung zwei oder mehrere ortsfest mit dem Gehäuse der Vorrichtung verbundene aktive Raddrehzahlsensorelemente nach der Erfindung umfaßt. Eine entsprechende Bremsvorrichtung ist in der älteren Deutschen Patentanmeldung DE 100 10 042 A1 beschrieben. Die beschriebene Vorrichtung umfaßt insbesondere ein verschiebbares Element mit dem Encoder, welches durch ein mit dem Stator verbundenes Lager geführt wird. Das Lager umgreift dabei das verschiebbare Element zumindest teilweise und führt dieses in axialer Richtung. Der Encoder ist dabei mit dem verschiebbaren Element formschlüssig verbunden, insbesondere in diesen eingebettet.

Vorteilhafterweise weist der erfindungsgemäße Bremspedalgeber neben einer besonders geringen Hysterese eine Richtungserkennung und eine hohe Ortsauflösung auf.

Weitere bevorzugte Ausführungsformen ergeben sich aus den Unteransprüchen oder aus der nachfolgenden Figurenbeschreibung.

Es zeigen

Fig. 1 in schematischer Darstellung eine Anordnung zur Erfassung von Raddrehzahlen nach dem Stand der Technik,

Fig. 2a eine Anordnung mit magnetischem Sensorelement ohne Barper-Pole mit rotierendem Feldvektor,

Fig. 2b eine erfindungsgemäße Anordnung eines Sensorelements mit Barper-Polen,

Fig. 3 eine erfindungsgemäße Anordnung mit Encoder und aktivem Sensor mit zwei Teilwandlern,

Fig. 4 eine weitere erfindungsgemäße Anordnung mit Encoder und aktivem Sensor, der ein alternatives AMR-Sensorelement mit gegeneinander um den Betrag "x" verschobenen Halbbrücken enthält.

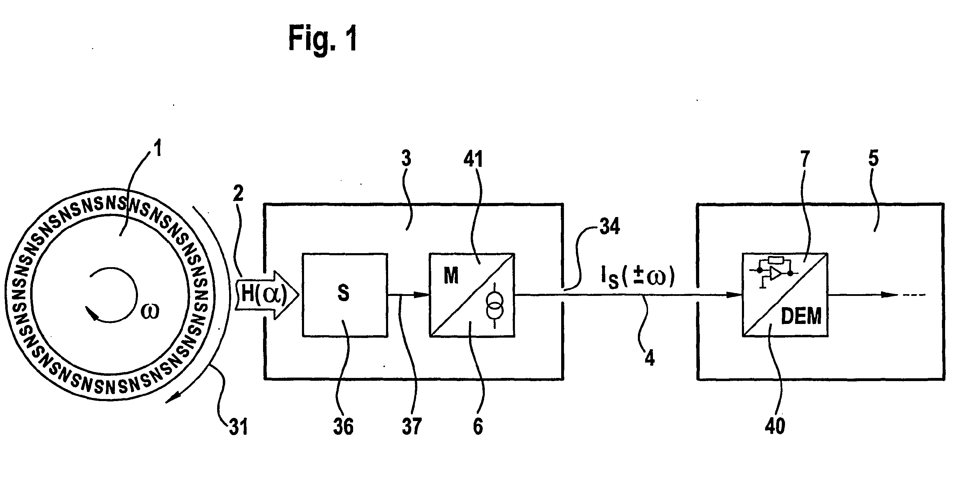

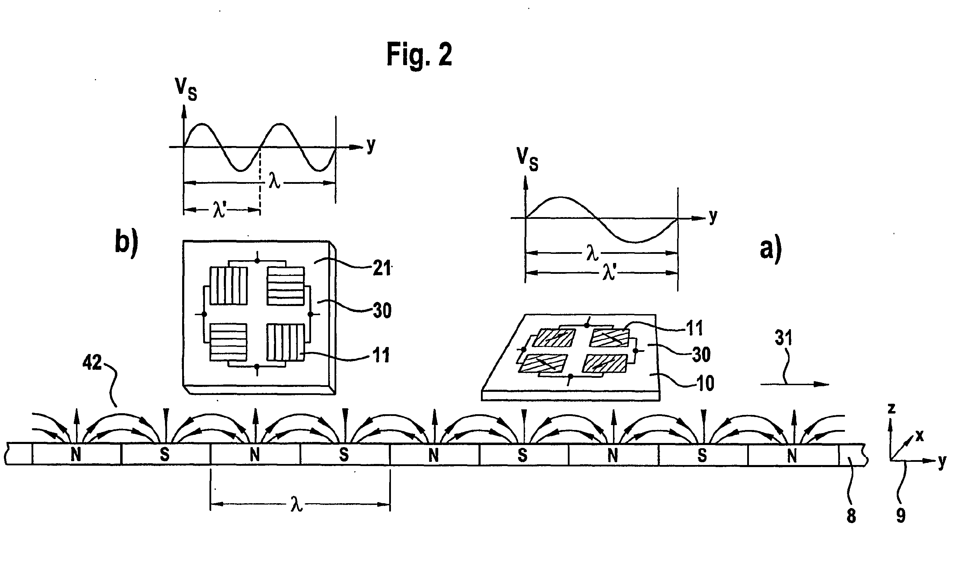

Die allgemeine Struktur einer gattungsgemäßen Sensoranordnung mit einem aktiven Weg- oder Winkel-Sensor 3 ist in Fig. 1 dargestellt. Sie besteht aus einem rotierenden Encoder 1 mit Nord-/Südpol-Magnetisierung, welcher in Richtung des Pfeils 31 rotiert. Während der Drehung wird das winkelabhängige Magnetsignal 2 (Magnetfeld H($\alpha$), siehe auch Bezugszeichen 42 in Fig. 2) erzeugt. Das Magnetsignal 2 wird vom ortsfest mit der Karosserie des Kraftfahrzeug verbundenen Sensorelement eines aktiven Sensors 3 aufgenommen und in ein elektrisches Signal gewandelt.

Das Sensorelement 36 ist in der Weise ausgebildet, daß aus den elektrischen Ausgangssignalen neben der Winkelgeschwindigkeit des Encoders zusätzlich auch die Drehrichtung bzw. Verschieberichtung des Encoders abgeleitet werden kann. Die Drehzahlinformation und die Drehrichtungsinformation werden einem Modulator 41 zugeführt, der daraus ein kodiertes Signal erzeugt. Durch den Modulator werden dann zur Erzeugung des Signalstroms eine oder mehrere Stromquellen 6 angesteuert.

Die Stromquelle 6 erzeugt nach Maßgabe der Sensorelementsignale einen Signalstrom Is an Schnittstelle 4 mit rechteckförmigen Stromimpulsen, welcher über eine zweiadrige Leitung an eine elektronische Kontrolleinrichtung 5 geführt wird, wobei das Bremsensteuergerät ganz allgemein eine Kontrolleinrichtung sein kann, die mit einem Mikroprozessorsystem ausgestattet ist.

Es kann in bestimmten Fällen zweckmäßig sein, auf an sich bekannte Weise zwischen den Raddrehzahlimpulsen in den Pulspausen der Drehzahlsignale Zusatzinformationen in Form codierter Signale zu übertragen. Die Zusatzsignale können in Form einzelner Bits übertragen werden, wobei beispielsweise jedes einzelne Bit einen Betriebszustand des Rades (Luftspalt, Drehrichtung etc.) oder auch der Bremse (z.B. Bremsbelagverschleiß) angibt. Zweckmäßigerweise ist die Amplitude der Zusatzsignale geringer, als die Amplitude der Drehzahlimpulse.

Steuergerät 5 umfaßt zur Auswertung der Schnittstellensignale eine Eingangsstufe 7, der eine Demodulationsstufe 40 nachgeschaltet ist, in der Winkelgeschwindigkeit und Drehrichtung als separate Informationen zurückgewonnen werden.

Fig. 2 zeigt schematisch die Abwicklung 8 einer Encoderspur. Entlang der Encoderspur verlaufen die Magnetfeldlinien H($\alpha$) 42 bzw. im abgewickelten Fall H (y) im wesentlichen in y- und z-Richtung des Raumes nach Maßgabe des Koordinatensystems 9 mit den Vektorkomponenten x, y und z. Fig. 2a zeigt eine Anordnung, bei der die Signalperiode $\lambda$' mit der Encoderperiode $\lambda$ im wesentlichen übereinstimmt. Die AMR-Struktur 10 besteht aus einer Fläche mit einer Brückenschaltung aus vier Einzelelementen 11. Die Fläche des Sensorelementes ist parallel zur Encoderspur ausgerichtet, d.h. die Flächennormale zeigt in Richtung der z-Achse (Normale auf der Encoderspur). Bei einer Bewegung des Sensorelements entlang der y-Achse rotiert der magnetische Feldvektor in z-Richtung durch die Flächenebene der AMR-Struktur hindurch. Bei Sensorelementen 10 und 21 in Teilbild a) werden, wie dies im Bereich der Raddrehzahlsensorik üblich ist, den AMR-Elementen auf an sich bekannte Weise sogenannte Barber-Pole überstrukturiert, wodurch sich unter anderem die Periode des Sensorsignals an die Periode anpassen läßt.

Das Sensorelement in Fig. 2b, welches im aktiven Sensor nach der Erfindung ebenfalls einsetzbar ist, weist keine Barber-Pole auf. Im Gegensatz zu Fig. 2a ist die Fläche 30 senkrecht zur Encoderspur ausgerichtet. Die Sensorelemente umfassen eine Brückenschaltung aus AMR-Elementen 11. Bei einer Bewegung des Sensorelements entlang der y-Achse rotiert der magnetische Feldvektor in z-Richtung durch die Flächenebene der AMR-Struktur. Am elektrischen Ausgang des Sensorelements entstehen pro Nord-/Südperiode $\lambda$ das Signal Vs, welches ein Signalperiode $\lambda$' aufweist, die halb so groß ist, wie die Encoderperiode $\lambda$. Hierdurch ergibt sich eine Auflösungserhöhung gegenüber der Anordnung in Fig. 2a.

In der Anwendung eines Sensorelementes nach Fig. 2b für Radlagersensoren ist es zweckmäßig, bei einem üblichen Lesedurchmesser 24 Polpaare pro Umfang zu wählen, so daß sich auf Grund der zuvor beschriebenen Auflösungserhöhung wiederum die für ABS-Regelgeräte gewünschte nominelle Auflösung von 48 Signalperioden pro Radumdrehung ergibt.

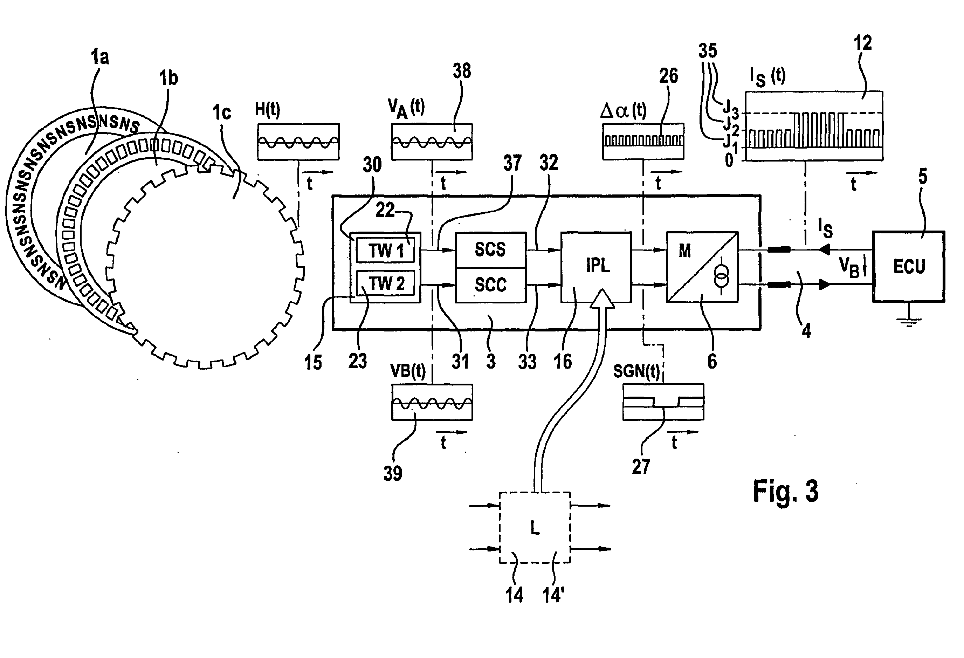

Fig. 3 zeigt einen erfindungsgemäßen aktiven Sensor 3 mit einem, der hier zur Sensierung des von einem Geberrades 1 veränderten Magnetfelds herangezogen wird. Als Geberrad 1 können neben permanentmagnetischen Geberelementen 1a (Encoder) auch ferromagnetische strukturierte Geberelemente, wie Lochscheiben 1b oder Zahnräder 1c, zum Einsatz kommen, wobei im Falle von nicht permanentmagnetischen Geberrädern zusätzliche Permanentmagnete benötigt werden, die bevorzugt am Drehzahlsensor befestigt sind.

Das Sensorelement 15 besteht aus zwei zueinander verschobenen oder gegeneinander verdrehten Teilwandlern TW1 und TW2. Bei den Teilwandlern TW1 und TW2 kann es sich um magnetoresistive Elemente oder Hall-Elemente handeln.

Durch die Verschiebung oder Verdrehung entstehen zwei unabhängige, gegeneinander phasenverschobene elektrische Teilsignale 38 und 39, insbesondere mit einem Signalverlauf nach dem Zusammenhang

$$A(t) = A \bullet Sin(\omega \bullet t)$$

und

$$B(t) = B \bullet Sin(\omega \bullet t \pm \varphi),$$

die den Kanälen SCS und SCC der Signalaufbereitungsstufe 13 zugeführt werden. Das von Signalaufbereitungsstufe 13 aufbereitete Impulssignal wird entweder einer Interpolatorstufe 16 zugeführt oder einem Logikbaustein 14 zugeführt.

Die Interpolatorschaltung 16 ist eine Signalfolgeschaltung, die eine Abtastung des Eingangssignal vornimmt.

Interpolatorstufe 16 unterteilt elektronisch jede Periode $\omega t$ der Signale 32 und/oder 33 von 360° in kleinere Winkelschritte, (z.B. 45°) und verarbeitet dann die Signale so weiter, daß am Ausgang des Interpolators 16 ein pulsförmiges Drehzahlsignal 26 und ein pulsförmiges Richtungssignal 27 bereitgestellt werden. Drehzahlsignal 26 hat hier die Form einer Impulskette, die Bruchteile von Winkelschritten (z.B. 45°) der Encoderperioden ($\omega t = 360°$) wiedergibt. Die Frequenz der Impulskette bildet die Rotationsgeschwindigkeit mit einer erhöhten Winkelauflösung ab.

Zur Einstellung der gewünschten Ortsauflösung läßt sich der Interpolationsfaktor (Grad der Feinunterteilung) auf an sich bekannte Weise durch eine geeignete Auslegung der Schaltung variieren.

Es kann zweckmäßig sein, daß die Schaltung so ausgelegt wird, daß Umschaltmittel in der Schaltung vorgesehen sind, mittels derer der Interpolationsfaktor der Interpolatorschaltung 16 vom Steuergerät 5 auch über die Schnittstelle 4 umgeschaltet werden kann.

Bei dem alternativ einsetzbaren Logikbaustein 14 werden die Eingangssignale verarbeitet und an der Schnittstelle zwischen 14 und 6 die Signale 25 ($\Delta\alpha(t)$) und 27 (SGN(t)) bereitstellt. Hierbei ist Signal 25 eine Impulskette, deren Impulse synchron zu den Winkelstellungen der Nord-/ Südpole bezüglich der Position des Sensorelements entstehen, so daß die Frequenz des Signals 25 die Rotationsgeschwindigkeit des Encoders abbildet.

Nach einem ersten Beispiel für eine Realisierung des Logikbausteins 14 werden alle positiven und negativen Flanken beider Signale 32 und 33 ausgewertet, um die Impulskette 25 zu generieren. Dies führt zu einer erhöhten Ortsauflösung von einem Achtel des Winkelsegmentes eines einzelnen Nord-/Südpolpaars des Encoders. Dieser Anwendungsfall ist dann vorteilhaft, wenn eine besonders hohe Ortsauflösung des erfindungsgemäßen Raddrehzahlsensors erzielt werden soll.

Nach einem weiteren Beispiel für eine Realisierung der Funktionsgruppe 14 werden alle positiven und negativen Flanken nur jeweils wahlweise eines der Signale 32 oder 33 ausgewertet, um die Impulskette 25 zu generieren. Die Ortsauflösung beträgt dann ein Viertel des Winkelsegmentes eines einzelnen Nord-/Südpolpaars des Encoders. Es ist ebensogut möglich, lediglich entweder die positiven oder die negativen Flanken beider Signale auszuwerten.

In beiden Fällen ist die Ortsauflösung nur noch halb so groß, wie dies bei voller Ausnutzung der Signale der Fall wäre.

Der aktive Sensor ist über eine elektrische Stromschnittstelle 4 mit einem elektronischen Steuergerät einer Bremsvorrichtung 5 verbunden, welche eine Energieversorgung (Betriebsspannung VB) für den Sensor über einen ständig fließenden Grundstrom bereitstellt. Über die Zweidrahtleitung 24 werden pulsförmige Raddrehzahlsignale 12 mit dem Signalstrom Is(t) übermittelt, wobei der Abstand der Impulse ein Maß für die Umlaufgeschwindigkeit des Encoders ist. Der Signalstrom überträgt zusätzlich die Drehrichtungsinformation über die Impulshöhe der Drehzahlimpulse an das Steuergerät 5, in dem dann auf einfache Weise eine Dekodierung des Signals mittels einer geeigneten Dekodierstufe vorgenommen werden kann.

Im elektronischen Steuergerät 5 werden die über die Schnittstelle 4 übertragenen Signale, nach dem sie dekodiert wurden, zweckmäßigerweise zur Ansteuerung von elektronischen Zählern genutzt, die die aufeinanderfolgenden Flankenabstände zeitlich vermessen und damit ein Maß für die Raddrehzahl bereitzustellen.

Der Signalstrom 12 besteht aus einer Kette von kurzen Stromimpulsen mit einer Dauer von vorzugsweise höchstens 100 $\mu$s. Zur Übertragung der Drehrichtungsinformation sind zwei unterschiedlicher Impulshöhen mit den Strompegeln J1, J2 und J3 vorgesehen.

Besonders bevorzugt werden die Stromstärken wie folgt gewählt:

J1 = 3 mA, J2 = 7 mA, und J3 = 14 mA, wobei als zulässiges Toleranzband Werte im Bereich von +- 20% noch in der Dekodierstufe erkannt werden sollen. Selbstverständlich können auch andere sinnvolle Strompegelkombinationen gewählt werden.

Die Kodierung besteht darin, daß die ansteigende Flanke jedes Impulses, unabhängig von seiner Impulshöhe, als Raddrehzahlimpuls gewertet wird und damit ein Maß für die Raddrehzahl ist. Es ergibt sich hierdurch der Vorteil, daß Raddrehzahlimpuls und zugehörige Drehrichtungsinformation synchron übertragen werden können. Hierdurch wird ein zeitlicher Verzug beider sich durch deren Impulshöhe unterscheidenden Signalarten vermieden, was insbesondere zur Bestimmung des Abrollweges eines Rades ab einem vorgegebenen Startzeitpunkt von Vorteil ist.

Gemäß einem weiteren, nicht dargestellten, Beispiel der Erfindung ist die Funktionsgruppe 10 eine Anordnung von zwei Differenz-Hall-Elementen, deren sensorisch wirksame Flächen relativ in Bezug auf die Nord-/ Südpol-Periode λ des magnetisierten Encoders örtlich eng benachbart angeordnet sind, dergestalt, daß wiederum zwei phasenverschobene, im Idealfall orthogonale Signalspannungen VA(t) und VB(t) erzeugt werden, wenn der Encoder rotiert. Die Hall-Flächen werden in diesem Fall vorzugsweise senkrecht zum Encoder ausgerichtet, so daß der Vektor der aus den Magnetpolen senkrecht austretenden Feldkomponente senkrecht durch die Flächenebene der Hall-Struktur verläuft.

Die vorstehend beschriebene Anordnung erlaubt eine Verarbeitung der Signale in Funktionselement 14 in der Weise, daß eine Ortsauflösung von ein Viertel des Winkelsegmentes oder alternativ eine Ortsauflösung von ein Halb des Winkelsegmentes erreicht werden kann.

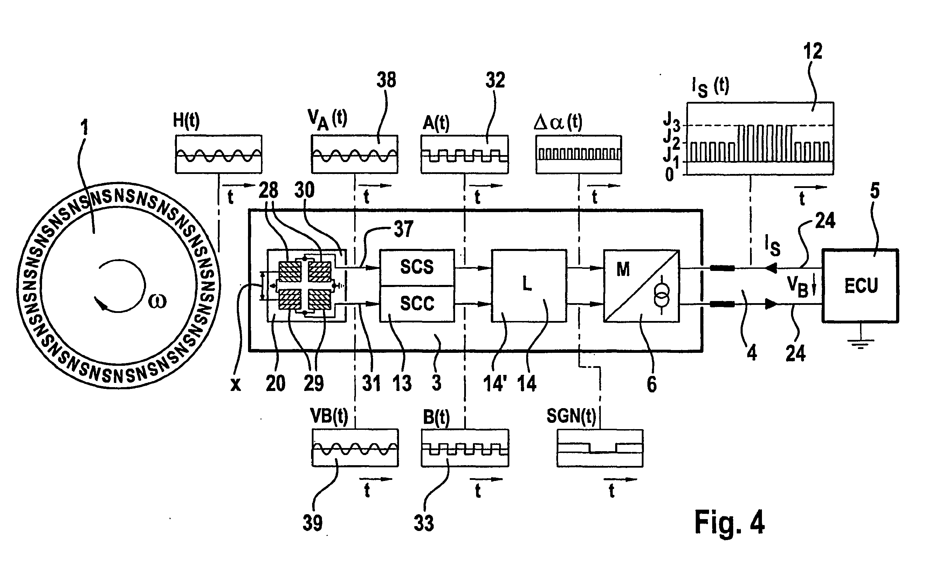

Fig. 4 zeigt ein weiteres Beispiel für einen aktiven Kraftfahrzeugdrehzahlsensor 3. Der Sensor 3 unterscheidet sich vom Sensor in Fig. 3 durch ein abgewandeltes Sensorelement 20. Sensorelement 20 umfaßt zwei um den Mittenabstand X gegeneinander verschobene AMR-Halbbrücken bzw. Halbbrückenzweige, welche, wie weiter oben beschrieben, zueinander phasenverschobene, insbesondere im wesentlichen orthogonale, elektrische Signale 38 und 39 an die Aufbereitungsstufe 13 heranführt.

In Verbindung mit Sensorelement 20 ist es besonders zweckmäßig, einen magnetisierten Encoder einzusetzen, allerdings sind die bereits beschriebenen nicht selbst magnetisierten Encoder mit einem Vorspannmagnet ebenfalls einsetzbar.

## Patentansprüche

1. Aktiver Magnetfeldsensor, insbesondere zur Erfassung der Raddrehzahl in Kraftfahrzeugen, umfassend mindestens ein Magnetsensorelement (10,21,36) zur Umwandlung eines zeitlich periodischen magnetischen Feldes in ein zeitlich periodisches elektrisches Sensorsignal an Signalausgängen (37,31) und eine elektronische Signalauswerteschaltung, wobei der Magnetfeldsensor über eine Sensorschnittstelle elektrisch versorgt wird, wobei in zwei oder mehreren getrennten, jeweils den Sensorsignalen zugeordneten, Signalkanälen der Auswerteschaltung eine aktive elektrische Verarbeitung von periodischen Signalen (38,39) des Magnetsensorelementes erfolgt, **dadurch gekennzeichnet, dass** in einem elektrischen Schaltungselement (16) der Signalauswerteschaltung eine oder mehrere Signalperioden, die von den zumindest zwei Signalkanälen stammen, in kleinere Winkelschritte unterteilt werden, so daß ein oder mehrere Signale mit erhöhter Winkelauflösung entstehen.

2. Magnetfeldsensor nach Anspruch 1, **dadurch ge-**

**kennzeichnet, dass** die aus den Signalkanälen gewonnenen Information, wie z.B. Drehzahlsignale, Richtungssignale etc., zeitsynchron an den Signalausgängen ausgegeben werden.

3. Magnetfeldsensor nach Anspruch 1 oder 2, **dadurch gekennzeichnet, dass** an einem ersten und einem weiteren Signalausgang (37,31) des Magnetsensorelements jeweils ein erstes und ein weiteres elektrisches periodisches Sensorsignal (38,39) erzeugt wird, wobei insbesondere das zweite Sensorsignal des Sensorelements gegenüber dem ersten Sensorsignal eine Phasenverschiebung $\pm\varphi$ aufweist.

4. Magnetfeldsensor nach mindestens einem der Ansprüche 1 bis 3, **dadurch gekennzeichnet, daß** zwei oder mehrere unabhängige Teilwandler (22,23,28,29) auf einer flächigen Hauptebene (30) des Sensorelements angeordnet sind, welche zur Erzeugung einer Phasenverschiebung $\pm\varphi$ örtlich um einen bestimmten Betrag zueinander verschoben oder um einen bestimmten Winkel gegeneinander verdreht sind.

5. Magnetfeldsensor nach mindestens einem der Ansprüche 1 bis 4, **dadurch gekennzeichnet, daß** die Teilwandler Brückenschaltungen und/oder Teilzweige von Brückenschaltungen sind.

6. Magnetfeldsensor nach mindestens einem der Ansprüche 1 bis 5, **dadurch gekennzeichnet, daß** die Teilwandler magnetoresistive Elemente oder Hall-Elemente umfassen.

7. Magnetfeldsensor nach mindestens einem der Ansprüche 1 bis 5, **dadurch gekennzeichnet, daß** die Teilwandler Differenz-Hall-Elemente umfassen.

8. Magnetfeldsensor nach mindestens einem der Ansprüche 5 bis 7, **dadurch gekennzeichnet, daß** die Hauptebene (30) parallel zu einer durch die Normale auf der Encoderspur (42) und der Drehrichtung des Encoders (46) aufgespannten Fläche ausgerichtet ist.

9. Magnetfeldsensor nach mindestens einem der Ansprüche 4 bis 8, **dadurch gekennzeichnet, daß** die Brückenschaltungen Wheatstone-Brücken sind, die gegeneinander um einen Winkel von etwa 45° verdreht sind.

10. Magnetfeldsensor nach mindestens einem der Ansprüche 1 bis 9, **dadurch gekennzeichnet, daß** an einem nach außen geführten Signalausgang des Sensors (34) ein Ausgangssignal (12) erzeugt wird, welches impulscodiert die Drehzahlinformation eines am Sensor vorbeibewegten Encoders enthält, wobei die Amplitude des Drehzahlsignals zur Kodierung der Drehrichtung herangezogen wird.

11. Magnetfeldsensor nach mindestens einem der Ansprüche 1 bis 10, **dadurch gekennzeichnet, daß** in einer Signalaufbereitungsstufe (13) die Sensorsignale (38,39) elektronisch in verstärkte Rechtecksignale (32,33) gewandelt werden, die zu den Sensorsignalen frequenzgleich sind und bei denen die ursprüngliche Phasenverschiebung zwischen den Signalkanälen erhalten bleibt.

12. Magnetfeldsensor nach Anspruch 11, **dadurch gekennzeichnet, daß** in einem elektrischen Schaltungselement (14) alle positiven und/oder negativen Flanken der Rechtecksignale (32) eines ersten Kanals und/oder alle positiven und negativen Flanken von einem oder mehreren weiteren Rechtecksignalen (33) ausgewertet werden.

13. Magnetfeldsensor nach Anspruch 12, **dadurch gekennzeichnet, daß** in einem elektrischen Schaltungselement (14') alle positiven und negativen Flanken des Rechtecksignals (32,33) von nur einem Kanal oder von zwei Kanälen ausgewertet wird.

14. Magnetfeldsensor nach Anspruch 12 oder 13, **dadurch gekennzeichnet, daß** im Schaltungselement (14,14') die Flankeninformationen des oder der eingehenden Signal-s/-e so verarbeitet wird/werden, daß daraus ein erstes Signal mit einer Information über die Bewegungsgeschwindigkeit (25) und ein zweites Signal mit einer Information über die Drehrichtung (27) erzeugt wird.

15. Magnetfeldsensor nach Anspruch 14, **dadurch gekennzeichnet, daß** das Bewegungsgeschwindigkeitssignal (25) und das Drehrichtungssignal (27) einem Modulator (6) zugeführt werden, der aus beiden Signalen ein einziges amplitudenmoduliertes Impulssignal erzeugt, welches am Ausgang des aktiven Sensors austritt.

16. Magnetfeldsensor nach mindestens einem der Ansprüche 1 bis 15, **dadurch gekennzeichnet, daß** am Ausgang des Sensors (34) über eine zweiadrige Schnittstelle (4) Stromimpulse ausgegeben werden, deren Abstand ein Maß für die Umfangsgeschwindigkeit eines am Sensorelement vorbeilaufenden Encoders ist und diese Stromimpulse abgesehen von einem ggf. vorgegebenen Offsetstrom zwei fest vorgegebene unterschiedliche nicht überlappende Strompegelsollwertbereiche (35) besitzen, die von Null verschieden sind.

17. Magnetfeldsensor nach Anspruch 16, **dadurch gekennzeichnet, daß** die Pulsdauer der ausgegebenen Drehzahlimpulse konstant ist.

18. Magnetfeldsensor nach mindestens einem der Ansprüche 1 bis 17, **dadurch gekennzeichnet, daß** die Signalaufbereitungsstufe (13), das Schaltungselement (14,14',16) und der Modulator (6) in einem gemeinsamen Gehäuse, insbesondere auf einem gemeinsamen Chip integriert sind.

19. Magnetfeldsensor nach mindestens einem der Ansprüche 1 bis 18, **dadurch gekennzeichnet, daß** die Ortsauflösung, mit der der aktive Sensor das periodische Magnetfeld abfühlt, mittels eines über einen Bus oder eine Leitung herangeführten externen Steuersignals wählbar ist.

20. Sensoranordnung aus einem Magnetfeldsensor nach mindestens einem der Ansprüche 1 bis 19 und einem Encoder, **dadurch gekennzeichnet, daß** der Encoder ein permanentmagnetischer Encoder (1a) oder ein ferromagnetischer Encoder (1b,1c) ist.

21. Radlagersensoreinheit umfassend einen ringförmigen Encoder, der insbesondere in einer Radlagerdichtung integriert ist, und einen aktiven Sensor, **gekennzeichnet durch** einen aktiven Magnetfeldsensor nach mindestens einem der Ansprüche 1 bis 19.

22. Kraftfahrzeugbeeinflussungsvorrichtung umfassend mehrere mit den Rädern verbundene Encoder mit jeweils mindestens einem den Encoder abfühlenden Magnetfeldsensor nach mindestens einem der Ansprüche 1 bis 19, und ein mit den aktiven Sensoren über Schnittstellen (4) verbundenes elektronisches Steuergerät (5), **dadurch gekennzeichnet, daß** die Vorrichtung, insbesondere das Steuergerät, Mittel zur Verarbeitung der Raddrehzahlinformation und der Drehrichtungsinformation Weiterfahrtbeeinflussungsmittel umfaßt, so daß sich in Abhängigkeit von den Raddrehzahlinformationen unerwünschtes Rollen des Fahrzeugs auf einer schiefen Ebene verhindern läßt.

23. Verwendung des Magnetfeldsensors nach mindestens einem der Ansprüche 1 bis 19 in Wegroll- und/oder Wegfahrsperrsystemen und/oder Systemen zur Diebstahlsicherung.

24. Verwendung des Magnetfeldsensors nach mindestens einem der Ansprüche 1 bis 19 in Bremspedalweggebern für Kraftfahrzeuge, in der ein linearer stabförmiger Encoder in Abhängigkeit von der Bremspedalbetätigung verschoben wird, insbesondere in elektrohydraulischen oder elektromechanischen Brems- und Fahrdynamiksteuerungssystemen.

25. Verfahren zum Eingriff in die Weiterfahrt eines Kraftfahrzeugs, **dadurch gekennzeichnet, daß** durch Eingriff in eine Vorrichtung zur Fahrzeugsteuerung, insbesondere in ein Steuergerät eines Fahrdynamik- und/oder Bremsen-Reglers, das Rollen des Kraftfahrzeugs auf einer schiefen Ebene unterbunden wird, in dem Bewegungssignale und Richtungssignale eines Magnetfeldsensors nach mindestens einem der Ansprüche 1 bis 19 durch die Fahrzeugsteuerungsvorrichtung ausgewertet werden.

**Claims**

1. Active magnetic field sensor, in particular for detecting the wheel speed in motor vehicles, comprising at least one magnetic sensor element (10, 21, 36) for converting a temporally periodic magnetic field into a temporally periodic electrical sensor signal at signal outputs (37, 31) and an electronic signal evaluation circuit, the magnetic field sensor being supplied with electrical power via a sensor interface, periodic signals (38, 39) from the magnetic sensor element being actively electrically processed in two or more separate signal channels of the evaluation circuit which are respectively assigned to the sensor signals, **characterized in that** one or more signal periods which come from the at least two signal channels are subdivided into smaller angular steps in an electrical circuit element (16) of the signal evaluation circuit, with the result that one or more signals with an increased angular resolution are produced.

2. Magnetic field sensor according to Claim 1, **characterized in that** the information obtained from the signal channels, for example speed signals, direction signals etc., are output at the signal outputs in a manner synchronized in time.

3. Magnetic field sensor according to Claim 1 or 2, **characterized in that** a first electrical periodic sensor signal (38) and a further electrical periodic sensor signal (39) are respectively generated at a first signal output (37) and at a further signal output (31) of the magnetic sensor element, the second sensor signal from the sensor element, in particular, having a phase shift $\pm\varphi$ with respect to the first sensor signal.

4. Magnetic field sensor according to at least one of Claims 1 to 3, **characterized in that** two or more independent converter elements (22, 23, 28, 29) are arranged on a flat main plane (30) of the sensor element, which converter elements are locally shifted by a particular amount with respect to one another or are rotated through a particular angle with respect to one another in order to generate a phase shift $\pm\varphi$.

5. Magnetic field sensor according to at least one of Claims 1 to 4, **characterized in that** the converter elements are bridge circuits and/or branch elements of bridge circuits.

**6.** Magnetic field sensor according to at least one of Claims 1 to 5, **characterized in that** the converter elements comprise magnetoresistive elements or Hall elements.

**7.** Magnetic field sensor according to at least one of Claims 1 to 5, **characterized in that** the converter elements comprise differential Hall elements.

**8.** Magnetic field sensor according to at least one of Claims 5 to 7, **characterized in that** the main plane (30) is oriented parallel to an area spanned by the normal on the encoder track (42) and the direction of rotation of the encoder (46).

**9.** Magnetic field sensor according to at least one of Claims 4 to 8, **characterized in that** the bridge circuits are Wheatstone bridges which are rotated through an angle of approximately 45° with respect to one another.

**10.** Magnetic field sensor according to at least one of Claims 1 to 9, **characterized in that** an output signal (12) is generated at a signal output of the sensor (34) which is routed to the outside, which signal contains the speed information for an encoder, which is moved past the sensor, in pulse-coded form, the amplitude of the speed signal being used to code the direction of rotation.

**11.** Magnetic field sensor according to at least one of Claims 1 to 10, **characterized in that,** in a signal conditioning stage (13), the sensor signals (38, 39) are electronically converted into amplified square-wave signals (32, 33) which are at the same frequency as the sensor signals and in which the original phase shift between the signal channels is retained.

**12.** Magnetic field sensor according to Claim 11, **characterized in that** all positive and/or negative edges of the square-wave signals (32) from a first channel and/or all positive and negative edges of one or more further square-wave signals (33) are evaluated in an electrical circuit element (14).

**13.** Magnetic field sensor according to Claim 12, **characterized in that** all positive and negative edges of the square-wave signal (32, 33) from only one channel or from two channels are evaluated in an electrical circuit element (14').

**14.** Magnetic field sensor according to Claim 12 or 13, **characterized in that** the edge information of the incoming signal(s) is processed in the circuit element (14, 14') in such a manner that it is used to generate a first signal containing information on the speed of movement (25) and a second signal containing information on the direction of rotation (27).

**15.** Magnetic field sensor according to Claim 14, **characterized in that** the speed of movement signal (25) and the direction of rotation signal (27) are supplied to a modulator (6) which uses the two signals to generate a single amplitude-modulated pulse signal which emerges at the output of the active sensor.

**16.** Magnetic field sensor according to at least one of Claims 1 to 15, **characterized in that** current pulses are output at the output of the sensor (34) via a two-wire interface (4), the distance between said current pulses being a measure of the circumferential speed of an encoder which moves past the sensor element, and these current pulses having, apart from an offset current which is possibly predefined, two permanently predefined different current level desired value ranges (35) which do not overlap and are different from zero.

**17.** Magnetic field sensor according to Claim 16, **characterized in that** the pulse duration of the speed pulses output is constant.

**18.** Magnetic field sensor according to at least one of Claims 1 to 17, **characterized in that** the signal conditioning stage (13), the circuit element (14, 14', 16) and the modulator (6) are integrated in a common housing, in particular on a common chip.

**19.** Magnetic field sensor according to at least one of Claims 1 to 18, **characterized in that** the spatial resolution with which the active sensor senses the periodic magnetic field can be selected using an external control signal which is introduced via a bus or a line.

**20.** Sensor arrangement comprising a magnetic field sensor according to at least one of Claims 1 to 19 and an encoder, **characterized in that** the encoder is a permanent-magnetic encoder (1a) or a ferromagnetic encoder (1b, 1c).

**21.** Wheel bearing sensor unit comprising an annular encoder, which is integrated, in particular, in a wheel bearing seal, and an active sensor, **characterized by** an active magnetic field sensor according to at least one of Claims 1 to 19.

**22.** Motor vehicle influencing apparatus comprising a plurality of encoders, which are connected to the wheels and each have at least one magnetic field sensor, which senses the encoder, according to at least one of Claims 1 to 19, and an electronic control unit (5) which is connected to the active sensors via interfaces (4), **characterized in that** the apparatus, in particular the control unit, comprises means for processing the wheel speed information and the direction of rotation information, onward journey influencing means, with the result that undesirable rolling of the vehicle on an inclined plane can be prevented on the basis of the wheel speed information.

23. Use of the magnetic field sensor according to at least one of Claims 1 to 19 in rolling inhibitor and/or immobilizer systems and/or theft protection systems.

24. Use of the magnetic field sensor according to at least one of Claims 1 to 19 in brake pedal position encoders for motor vehicles, in which a linear rod-shaped encoder is displaced on the basis of the activation of the brake pedal, in particular in electrohydraulic or electromechanical braking and driving dynamics control systems.

25. Method for intervening in the onward journey of a motor vehicle, **characterized in that** rolling of the motor vehicle on an inclined plane is prevented by intervening in a vehicle control apparatus, in particular in a control unit of a driving dynamics and/or brake controller, by virtue of the vehicle control apparatus evaluating movement signals and direction signals from a magnetic field sensor according to at least one of Claims 1 to 19.

**Revendications**

1. Détecteur actif de champ magnétique, en particulier pour saisir la vitesse de rotation des roues de véhicules automobiles, qui comprend :

au moins un élément de détecteur magnétique (10, 21, 36) qui convertit un champ magnétique périodique dans le temps en un signal électrique de détection périodique dans le temps qui est appliqué sur des sorties de signal (37, 31) et un circuit électronique d'évaluation des signaux, le détecteur de champ magnétique étant alimenté en électricité par une interface de détecteur, un traitement électrique actif des signaux périodiques (38, 39) de l'élément de détecteur magnétique étant réalisé dans deux canaux de signaux séparés ou plus, associés aux signaux de détection respectifs, du circuit d'évaluation, **caractérisé en ce que** une ou plusieurs périodes de signal qui proviennent des deux canaux de signaux ou plus sont divisées en plus petits pas angulaires dans un élément électrique de circuit (16) du circuit d'évaluation des signaux de manière à obtenir un ou plusieurs signaux à plus haute résolution angulaire.

2. Détecteur de champ magnétique selon la revendication 1, **caractérisé en ce que** l'information obtenue sur les canaux de signaux, par exemple des signaux de vitesse de rotation, des signaux de sens, etc., est délivrée de manière synchronisée dans le temps aux sorties de signaux.

3. Détecteur de champ magnétique selon les revendications 1 ou 2, **caractérisé en ce qu'**un premier et un autre signal électrique périodique de détection (38, 39) sont appliqués sur une première et une autre sortie de signaux (37, 31) respectives de l'élément de détecteur magnétique, le deuxième signal de détection de l'élément de détecteur présentant par rapport au premier signal de détection un déphasage de $\pm \varphi$.

4. Détecteur de champ magnétique selon au moins l'une des revendications 1 à 3, **caractérisé en ce que** deux convertisseurs partiels indépendants ou plus (22, 23, 28, 29) sont disposés sur un plan principal plat (30) de l'élément de détecteur et sont décalés localement l'un par rapport à l'autre d'une valeur définie pour provoquer un déphasage $\pm \varphi$ ou sont tournés l'un par rapport à l'autre d'un angle défini.

5. Détecteur de champ magnétique selon au moins l'une des revendications 1 à 4, **caractérisé en ce que** les convertisseurs partiels sont des circuits de pont et/ou des branches partielles de circuits de pont.

6. Détecteur de champ magnétique selon au moins l'une des revendications 1 à 5, **caractérisé en ce que** les convertisseurs partiels comprennent des éléments magnétorésistifs ou des éléments Hall.

7. Détecteur de champ magnétique selon au moins l'une des revendications 1 à 5, **caractérisé en ce que** les convertisseurs partiels comprennent des éléments Hall différentiels.

8. Détecteur de champ magnétique selon au moins l'une des revendications 5 à 7, **caractérisé en ce que** le plan principal (30) est orienté parallèlement à une surface sous-tendue par la normale à la piste de l'encodeur (42) et au sens de rotation de l'encodeur (46).

9. Détecteur de champ magnétique selon au moins l'une des revendications 4 à 8, **caractérisé en ce que** les circuits de pont sont des ponts de Wheatstone qui sont tournés l'un par rapport à l'autre d'un angle d'environ 45°.

10. Détecteur de champ magnétique selon au moins l'une des revendications 1 à 9, **caractérisé en ce qu'**un signal de sortie (12) qui contient sous forme d'impulsion codée l'information de vitesse de rotation d'un encodeur qui passe devant le détecteur est appliqué sur une sortie de signaux prolongée vers l'extérieur du détecteur (34), l'amplitude du signal de vitesse de rotation étant utilisée pour coder le sens de rotation.

11. Détecteur de champ magnétique selon au moins l'une des revendications 1 à 10, **caractérisé en ce que** les signaux de détecteur (38, 39) sont convertis électroniquement dans un étage (13) de préparation des signaux en signaux rectangulaires amplifiés (32, 33) qui ont la même fréquence que les signaux de détecteur et qui conservent le déphasage d'origine entre les canaux de signaux.

12. Détecteur de champ magnétique selon la revendication 11, **caractérisé en ce que** tous les flancs positifs et/ou les flancs négatifs des signaux rectangulaires (32) d'un premier canal et/ou tous les flancs positifs et les flancs négatifs d'un ou plusieurs autres signaux rectangulaires (33) sont évalués dans un élément électrique de circuit (14).

13. Détecteur de champ magnétique selon la revendication 12, **caractérisé en ce que** tous les flancs positifs et les flancs négatifs du signal rectangulaire (32, 33) d'un seul canal ou de deux canaux sont évalués dans un élément électrique de circuit (14').

14. Détecteur de champ magnétique selon la revendication 12 ou 13, **caractérisé en ce que** les informations concernant les flancs du ou des signaux entrants sont traitées dans l'élément de circuit (14, 14') de manière à en extraire un premier signal qui présente une information sur la vitesse de déplacement (25) et un deuxième signal qui contient une information sur le sens de rotation (27).

15. Détecteur de champ magnétique selon la revendication 14, **caractérisé en ce que** le signal (25) de vitesse de déplacement et le signal (27) de sens de rotation sont apportés à un modulateur (6) qui forme à partir des deux signaux un unique signal d'impulsions modulées en amplitude qui sort par la sortie du détecteur actif.

16. Détecteur de champ magnétique selon au moins l'une des revendications 1 à 15, **caractérisé en ce que** des impulsions de courant dont la distance constitue une mesure de la vitesse périphérique d'un encodeur qui passe devant l'élément de détecteur sont émises à la sortie du détecteur (34) par une interface (4) à deux fils, ces impulsions de courant possédant, compte tenu d'un courant de décalage éventuellement prédéterminé, deux plages (35) de valeurs de consigne de niveau de courant différentes, prédéterminées, non superposées et différentes de zéro.

17. Détecteur de champ magnétique selon la revendication 16, **caractérisé en ce que** la durée des impulsions de vitesse de rotation émises est constante.

18. Détecteur de champ magnétique selon au moins l'une des revendications 1 à 17, **caractérisé en ce que** l'étage (13) de préparation des signaux, l'élément de circuit (14, 14', 16) et le modulateur (6) sont intégrés dans un boîtier commun et en particulier sur une puce électronique commune.

19. Détecteur de champ magnétique selon au moins l'une des revendications 1 à 18, **caractérisé en ce que** la résolution spatiale à laquelle le détecteur actif sonde le champ magnétique périodique peut être sélectionnée au moyen d'un signal externe de commande amené par un bus ou un conducteur.

20. Système de détecteur constitué d'un détecteur de champ magnétique selon au moins l'une des revendications 1 à 19 et d'un encodeur, **caractérisé en ce que** l'encodeur est un encodeur (1a) à aimant permanent ou un encodeur ferromagnétique (1b, 1c).

21. Unité de détecteur sur palier de roue qui comprend un encodeur annulaire intégré en particulier dans un joint d'étanchéité de palier de roue, et un détecteur actif, **caractérisée par** un détecteur actif de champ magnétique selon au moins l'une des revendications 1 à 19.

22. Dispositif d'action sur un véhicule automobile, qui comprend plusieurs encodeurs reliés aux roues, chacun doté d'au moins un détecteur de champ magnétique selon au moins l'une des revendications 1 à 19 qui sonde l'encodeur et un appareil électronique de commande (5) relié aux détecteurs actifs par des interfaces (4),
**caractérisé en ce que**
le dispositif, en particulier l'appareil de commande, comporte des moyens de traitement des informations sur la vitesse de rotation des roues et des informations sur le sens de rotation et des moyens pour agir sur la poursuite du déplacement en fonction des informations données sur la vitesse de rotation des roues de manière à pouvoir empêcher un roulement indésirable du véhicule sur un plan oblique.

23. Utilisation du détecteur de champ magnétique selon au moins l'une des revendications 1 à 19 dans des systèmes de blocage du patinage et/ou de déplacement et/ou dans des systèmes de protection contre le vol.

24. Utilisation du détecteur de champ magnétique selon au moins l'une des revendications 1 à 19 dans les encodeurs de déplacement de pédale de frein des véhicules automobiles, dans lesquels un encodeur linéaire en forme de barreau est déplacé en fonction de l'actionnement de la pédale du frein, en particulier dans les systèmes électrohydrauliques ou électromécaniques de commande de freinage ou de dynamique de conduite.

**25.** Procédé d'intervention sur la poursuite du déplacement d'un véhicule automobile, **caractérisé en ce que** par intervention dans un dispositif de commande du véhicule, en particulier un appareil de commande d'un régulateur de dynamique de conduite et/ou de freinage, le roulage du véhicule automobile sur un plan oblique est empêché en faisant évaluer les signaux de déplacement et les signaux de direction d'un détecteur de champ magnétique selon au moins l'une des revendications 1 à 19 par le dispositif de commande du véhicule.

# Fig. 1

# Fig. 2

EP 1 307 709 B1

Fig. 3

Fig. 4

EP 1 307 709 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0736183 A1
- DE 19618867 A1
- DE 19634715
- DE 19911774
- DE 10010042 A1